(19) Europäisches Patentamt
European Patent Office
Office européen des brevets

(11) **EP 4 113 482 B1**

(12) **EUROPÄISCHE PATENTSCHRIFT**

(45) Veröffentlichungstag und Bekanntmachung des Hinweises auf die Patenterteilung:
**24.07.2024 Patentblatt 2024/30**

(21) Anmeldenummer: **21182782.9**

(22) Anmeldetag: **30.06.2021**

(51) Internationale Patentklassifikation (IPC):
**G09B 19/00** (2006.01)        **G09B 9/00** (2006.01)
**G06F 3/01** (2006.01)

(52) Gemeinsame Patentklassifikation (CPC):
**G09B 19/00**

(54) **VERFAHREN ZUM STEUERN EINER KONTROLLANORDNUNG UND KONTROLLANORDNUNG**

CONTROL ARRANGEMENT AND METHOD FOR CONTROLLING A CONTROL ARRANGEMENT

PROCÉDÉ DE COMMANDE D'UN AGENCEMENT DE CONTRÔLE ET AGENCEMENT DE CONTRÔLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.01.2023 Patentblatt 2023/01**

(73) Patentinhaber: **Siemens Aktiengesellschaft**
**80333 München (DE)**

(72) Erfinder: **Moreno Lopez, Pedro**
**91315 Höchstadt a.d.Aisch (DE)**

(74) Vertreter: **Siemens Patent Attorneys**
**Postfach 22 16 34**
**80506 München (DE)**

(56) Entgegenhaltungen:
**CN-A- 110 162 169        CN-A- 110 349 058**
**US-A1- 2018 232 132**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Steuern einer Kontrollanordnung und Kontrollanordnung gemäß dem Oberbegriff des Anspruch 1 und eine Kontrollanordnung gemäß Anspruch 7.

Der Betrieb einer Netzleitstelle, die beispielsweise mit der aus der Broschüre "Intelligent control center technology - Spectrum Power™ - The Smart Grid - Constant Energy in a World of Constant Change", Article No. SIDG-B10025-00-7600, Siemens AG 2021, bekannten Software Spectrum Power betrieben wird, erfordert von den Benutzern bzw. Leitstellentechnikern die Fähigkeit, bei auftretenden Störungen des Betriebs des zu kontrollierenden elektrischen Energieversorgungsnetzes schnell und kompetent zu reagieren. Dies ist jedoch aufgrund der enormen Komplexität einer Netzleitstelle schwierig.

Erfahrungswerte bei der Analyse von Störungen und dem Reagieren von Benutzern einer Leitwarte auf diese Störungen zeigen, dass über 2/3 aller Störungen durch falsches bzw. nicht ausreichendes Reagieren mit Gegenmaßnahmen aufgrund von Fehlverhalten oder Nicht-beachten von Sicherheitsvorschriften einhergeht. Dies erklärt sich teilweise dadurch, dass Netzstörungen, die schnelles und richtiges Handeln eines Benutzers bzw. Technikers erfordern, relativ selten auftreten (max. ca. 5 % der Arbeitszeit). Deswegen wird ein solches Ereignis häufig als sehr stressig von den Benutzern empfunden, während sie versuchen, Störungen durch Auslösen von Gegenmaßnahmen zu beseitigen.

Aus der Veröffentlichung "Simulierte Realität - Ein neuer Simulator für die Dispatcher-Schulung", ABB Technik 2005, ist es bekannt, Benutzer einer Netzleitstelle mit simulierten Störfällen zu konfrontieren, so dass die Benutzer richtiges und schnelles Auslösen von Gegenmaßnahmen üben können.

Ferner sind die Druckschriften CN110162169A, US2018/232132A1 und CN110349058A bekannt, die sich mit einer Bedienung und/ einem Training für eine Benutzung komplexer Anlagen beschäftigen.

Ausgehend von bekannten Verfahren zum Steuern von Kontrollanordnungen stellt sich an die Erfindung die Aufgabe, ein Verfahren anzugeben, mit dem Störungen im Betrieb der Kontrollanordnung besonders sicher beseitigt werden können.

Die Erfindung löst diese Aufgabe durch ein Verfahren gemäß Anspruch 1.

Die Netzleitstelleneinrichtung ist z.B. als ein leistungsfähiger Server-Computer ausgebildet, auf dem eine Leistellensoftware zur Kontrolle eines elektrischen Energieversorgungs- oder Übertragungsnetzes installiert ist. Die Netzleitstelleneinrichtung erstellt basierend auf den bereitgestellten Eingangsdaten Kontrollsignale, um z.B. die Stabilität des Energieversorgungs- oder Übertragungsnetzes sicher zu stellen und Blackouts zu vermeiden.

Kontrollsignale sind z.B. Steuerbefehle aus Schalteinrichtungen im elektrischen Netz oder z.B. an Netzregler und regelbare Transformatoren. Ferner können Kontrollsignale auch steuerbare Verbraucher oder Erzeuger elektrischer Energie wie z.B. Gaskraftwerke betreffen, um Verbrauch und Erzeugung elektrischer Energie auszugleichen und die Nennspannung sowie die Nennfrequenz innerhalb normaler Betriebsbedingungen zu halten, also z.B. +/- 10 % der Nennspannung und/oder +/- 10 % der Nennfrequenz des kontrollierten Netzes.

Kontrollsignale sind beispielswiese Datentelegramme mit Steuerbefehlen für Schalter in einem elektrischen Energieversorgungsnetz der Mittelspannungs- oder Hochspannungsebene. In einem einfachen Fall kann beispielsweise ein Lastabwurf durch ein Öffnen eines oder mehrerer Schalter dazu dienen, das Energieversorgungsnetz zu stabilisieren und einen großflächigen Blackout zu verhindern.

Die Störung könnte beispielsweise anhand von stark unter die Nennspannung und/oder Nennfrequenz abfallende Spannungs- bzw. Frequenzwerte erkennbar sein. Im Sinne der Erfindung sind Notfalldaten, die auf eine Störung des Betriebs der Netzleitstelleneinrichtung hinweisen, z.B. Messdaten, die stark von im Normalbetrieb der Netzleitstelleneinrichtung in einem realen Energienetz abweichen.

Die Kontrollanordnung, die Bereitstellungseinrichtung, die Notfalleinrichtung, die Auswertungseinrichtung und die Körperfunktionsmesseinrichtung verfügen z.B. über Datenspeichermittel wie z.B. Flashspeicher, solid-state-disks, hard drives. Ferner weisen sie z.B. Prozessormittel wie eine central processing unit (CPU) auf. Die genannten Einrichtungen können jedoch auch ganz oder teilweise als Softwarekomponenten ausgebildet und die auf der Kontrollanordnung als Software ausgeführt werden. Ferner kann eine Umsetzung als Applikationen einer Cloud vorgesehen sein. Eine Cloud im Sinne der Erfindung ist eine Mehrzahl von Datenspeicher- und Datenverarbeitungsressourcen, die über ein Netzwerk wie z.B. das Internet miteinander verbunden sind.

Messdaten sind z.B. digitale Datentelegramme, können aber auch analoge Signale umfassen.

Eine Körperfunktionsmesseinrichtung weist z.B. einen Sensor zur Erfassung von Daten über eine Körperfunktion auf, beispielsweise einen Leitfähigkeitssensor zur Messung der Hautleitfähigkeit. Diese wird i.d.R. erhöht, wenn ein Mensch unter Stress gerät und beginnt, zu schwitzen.

Typischerweise geraten ungeübte Benutzer der Kontrollanordnung unter Stress, sobald eine gravierende Störung auftritt. Können Sie eine solche Störung nicht rasch beseitigen, drohen Blackouts mit einem hohen finanziellen Schaden für den Arbeitgeber und im schlimmsten Fall sogar Personenschäden mit Toten und Verletzten, wenn z.B. in kritischen Situationen die Beleuchtung oder im Verkehr die Verkehrsampeln ausfallen. Dieser Stress zeigt sich physiologisch in veränderten Körperfunktionsdaten und ist damit messbar. Es ist jedoch hinlänglich bekannt, dass starker Stress beim Menschen zur Einleitung von unbewussten Überlebensstrategien führt, nämlich einem Flucht- oder Kampfverhalten ("Fight or Flight"). Beides geht jedoch mit einer hohen Beanspruchung der Muskeln und des kardiovaskulären Systems einher, sodass der Körper zugunsten dieser Komponenten die Konzentrationsfähigkeit, ggf. auch die Denkfähigkeit, herabsetzt. Deshalb treffen Menschen unter starken Stress häufig schlechtere Entscheidungen als "mit kühlem Kopf".

Die Erfindung ermöglicht es nun erstmals, diesen Stress zu messen und das Training der Benutzer objektiv zu evaluieren. Ein Benutzer kann das Beheben von Störungen üben, bis er schließlich weniger Stress empfindet. Dies sollte dazu führen, dass Störungen effizienter beseitigt werden können, was Schäden minimiert, Kosten einspart und die Verfügbarkeit des Energienetzes erhöht.

Eine Auswertung eines zeitlichen Verlaufs der Körperfunktionsdaten beinhaltet beispielsweise, die Körperfunktionsdaten nach der Zeit aufzutragen und den Zeitraum der Störung zu markieren. Typischerweise können sich unter Stress, während der Störung, die Körperfunktionsdaten verändern. Z.B. kann ein erhöhter Puls, eine erhöhte Herzrate, eine erhöhte Leitfähigkeit der Haut im Vergleich zum Zeitraum vor der Störung festgestellt werden. Basierend auf dem Zeitraum vor der Störung kann für jede unterschiedliche Art von Körperfunktionsdaten ein eigener Schwellenwert festgelegt werden, ab dem ein erhöhter Stresslevel angenommen wird. Der Schwellenwert kann manuell festgelegt werden oder auch automatisiert, z.B. mit einem festen prozentualen Abstand zum Durchschnitt des Wertes der Körperfunktion vor der Störung. Der prozentuale Abstand kann z.B. 30 % betragen, bevorzugt 25 %, noch mehr bevorzugt 20 %. Beispielsweise beträgt der Puls eines Benutzers vor der Störung im Durchschnitt 80 Schläge pro Minute, während der Störung 140 Schläge pro Minute und damit über dem Schwellenwert von 104 Schläge pro Minute (130 % von 80 Schläge pro Minute). In diesem Fall wird erhöhter Stress des Benutzers angenommen.

Der Stresswert kann in diesem Beispiel als prozentuale Erhöhung der Körperfunktionsdaten bzw. des Pulses im Vergleich mit dem Durchschnitt des Wertes der Körperfunktion vor der Störung festgelegt werden, in diesem Fall also 140 Schläge pro Minute / 80 Schläge pro Minute * 100 % - 100 % = 75 %.

Werden mehrere Körperfunktionsdaten ausgewertet, so kann für jeden Körperfunktionsdaten gesondert ein spezifischer Stresswert berechnet und dieser dann gemittelt werden, um den Stresswert zu bestimmen. Ferner kann eine Gewichtung vorgenommen werden, so dass z.B. der Hautleitwert stärker in den Stresswert einfließt als z.B. der Puls.

In einer bevorzugten Ausführungsform des erfindungsgemäßen Verfahrens werden für die Messdaten und/oder die Notfalldaten simulierte Daten verwendet. Dies ist ein Vorteil, weil eine Trainingssituation ohne Einfluss auf ein reales Geschehen wie z.B. die Regelung eines Energieversorgungsnetzes besonders sicher und unter kontrollierten Bedingungen durchgeführt werden kann. Simulierte Daten bedeutet in diesem Fall, dass es sich z.B. nicht um Echtzeit-Messwerte von Messeinrichtungen aus einem Energienetz handelt, sondern vielmehr um vorab künstlich erzeugte Messwerte zur Simulation eines Betriebs der Kontrollanordnung bzw. einer Störung des Betriebs handelt. Alternativ oder zusätzlich können auch reale Messwerte des Betriebs der Kontrolleinrichtung, die vorher aufgezeichnet und gespeichert wurden, eingesetzt werden. Ebenso können reale Störungen gespeichert werden, um diese später für Trainingszwecke erneut einspielen zu können.

In einer bevorzugten Ausführungsform des erfindungsgemäßen Verfahrens werden für die Körperfunktionsdaten mindestens eine der folgenden Körperfunktionsdaten verwendet: Hauttemperatur, Elektrischer Leitwert der Haut, Herzfrequenz, Pulsfrequenz, Blutdruck, Muskeltonus, Elektroenzephalogramm, Speichel-Cortisol-Wert, Blutzucker.

Eine Hauttemperatur kann beispielsweise über einen Temperatursensor, z.B. für eine Temperaturmessung mittels Infrarotlicht-Messungen, bestimmt werden, wobei der Temperatursensor an der Haut eines Benutzers verrutschfest angeordnet wird, z.B. mit einem Halteband.

Entsprechend können Herzfrequenz und Pulsfrequenz mit geeigneten üblichen Sensoren gemessen werden. Der Blutdruck kann mit einer automatischen Blutdruckmanschette gemessen werden.

Ein Muskeltonus kann über die Ableitung von Elektroden, die auf große Muskelpartien z.B. aufgeklebt werden oder mittels Klemmsitz festgehalten werden, anhand von Muskelkontraktionen mit entsprechender elektrischer Reizleitungsaktivität gemessen werden.

Ein Elektroenzephalogramm (EEG) ist eine Ableitung der elektrischen Aktivität des Gehirns eines Benutzers und wird typischerweise mit einer Reihe von Elektroden gemessen, die auf die Kopfhaut angepresst werden. Dies kann z.B. mit einer Haube erfolgen, an der die Elektroden angeordnet sind. Mit bekannten Verfahren der EEG-Analyse, teilweise auch unter Einsatz von Eichmessungen in Ruhe / ohne Stress sowie im Schlaf und von maschinellem Lernen, kann z.B. bestimmt werden, ob ein Benutzer besonders aufmerksam ist.

Der Speichel-Cortisol-Wert kann gemessen werden, indem in regelmäßigen Zeitabständen - z.B. jede Minute, eine Speicherprobe entnommen wird. Dies kann manuell oder auch automatisiert durch eine Absaugvorrichtung für Speicher, wie sie Zahnärzte einsetzen, erfolgen. Der Speichel kann im Labor auf die Konzentration des Hormons Cortisol analysiert werden, das vermehrt ausgeschüttet wird, wenn ein Mensch unter Stress gerät.

Die Blutzuckerkonzentration kann nach einer regelmäßigen Blutentnahme, z.B. jede Minute, im Labor gemessen werden und erlaubt ebenfalls Rückschlüsse auf ein Stresslevel eines Menschen.

In einer bevorzugten Ausführungsform des erfindungsgemäßen Verfahrens wird das Messen von Körperfunktionsdaten kontinuierlich durchgeführt. Kontinuierlich bedeutet dabei im Sinne der Erfindung, dass nicht einmalig gemessen wird, sondern mehrfach über eine Zeitspanne, die sowohl einen "normalen" Betrieb der Kontrollanordnung vor der Störung als auch dem Zeitraum der Störung selbst umfasst. Bevorzugt kann auch noch ein Zeitraum nach der Störung gemessen werden. Die mehrmalige Messung kann dabei z.B. regelmäßig jede Minute, bei einigen Messverfahren auch jede Sekunde, im Falls des EEGs auch im Millisekunden-Bereich wiederholt werden.

Es werden das Einspeisen von Notfalldaten und Erstellen von Kontrollsignalen wiederholt, bis der Stresswert während einer Störung unterhalb eines vorher festgelegten Schwellenwertes liegt. Dies ist ein Vorteil, weil auch diese Weise objektiv ermittelt werden kann, ob ein Benutzer durch das Training ausreichend vorbereitet ist in dem Sinne, dass er nicht unter übermäßigen Stress gerät und ggf. schlechtere Entscheidungen trifft als bei einem geringen physiologisch messbaren Stress. Liegt der Stresswert bei einer Trainingssession trotz stressinduzierender Störung unter dem Schwellenwert, so kann davon ausgegangen werden, dass der Benutzer das Ziel der Übung erreicht hat.

In einer bevorzugten Ausführungsform des erfindungsgemäßen Verfahrens werden das Einspeisen von Notfalldaten und Erstellen von Kontrollsignalen wiederholt, bis die gemessenen Körperfunktionsdaten während der Störung unterhalb vorher festgelegter Schwellenwerte für die Körperfunktionsdaten liegen. Dies ist ein Vorteil, weil auch diese Weise objektiv ermittelt werden kann, ob ein Benutzer durch das Training ausreichend vorbereitet ist in dem Sinne, dass er nicht unter übermäßigen Stress gerät und ggf. schlechtere Entscheidungen trifft als bei einem geringen physiologisch messbaren Stress. Liegen die Körperfunktionsdaten bei einer Trainingssession trotz stressinduzierender Störung unter den Schwellenwerten, so kann davon ausgegangen werden, dass der Benutzer das Ziel der Übung erreicht hat.

In einer bevorzugten Ausführungsform des erfindungsgemäßen Verfahrens wird für die Messdaten mindestens einer der folgenden Messwerte eingesetzt: Spannung, Stromstärke, Phasor-Messwerte, Schaltstellungen von Stufenschaltern von Transformatoren, Leistung, Blindleistung, Power Quality, Betriebszustände von Betriebsmitteln, Status von Schutzgeräten. Die Messwerte werden dabei z.B. von Messeinrichtungen, Intelligent Electronic Devices (IEDs), remote terminal units (RTUs), Schutzgeräten und Phasor-Measurement Units (PMUs) erfasst.

In einer bevorzugten Ausführungsform des erfindungsgemäßen Verfahrens wird für die Notfalldaten mindestens eine der folgenden Notfalldaten eingesetzt: Strommessdaten, die auf eine Störung des Netzes hindeuten; Spannungsmessdaten, die auf eine Störung des Netzes hindeuten; Blackout-Signale von Smart Metern und/oder IEDs und/oder Schutzgeräten; Telefonanruf über eine Störung. Eine Störung im Netz fällt beispielsweise über eine Spannung oder eine Stromstärke oder eine Frequenz auf, die von der vorgesehenen Nennspannung, Nennstromstärke und Nennfrequenz abweichen. Notfalldaten können alternativ auch auf eine Manipulation von Messdaten oder den Ausfall einer Kommunikation mit Messeinrichtungen im Energieverteilungsnetz hinweisen, weil z.B. im Hintergrund ein Hackerangriff den Betrieb stört.

Ausgehend von bekannten Kontrollanordnungen stellt sich an die Erfindung die Aufgabe, eine Kontrollanordnung anzugeben, mit der Störungen im Betrieb der Kontrollanordnung besonders sicher beseitigt werden können.

Die Erfindung löst diese Aufgabe durch eine Kontrollanordnung gemäß Anspruch 7. Bevorzugte Ausführungsformen der erfindungsgemäßen Kontrollanordnung sind in den abhängigen Ansprüchen 8 bis 12 angegeben. Es ergeben sich dabei sinngemäß die gleichen Vorteile wie eingangs für das erfindungsgemäße Verfahren erläutert.

Zur besseren Erläuterung der Erfindung zeigen in schematischer Darstellung die

Figur 1    ein Beispiel für einen Trainingssimulator, und

Figur 2    eine Kommunikationsübersicht für den Trainingssimulator gemäß Figur 1, und

Figur 3    einen Übersichtsplan für den Trainingssimulator gemäß Figur 1, und

Figur 4    ein Beispiel für erfasste Körperfunktionsdaten.

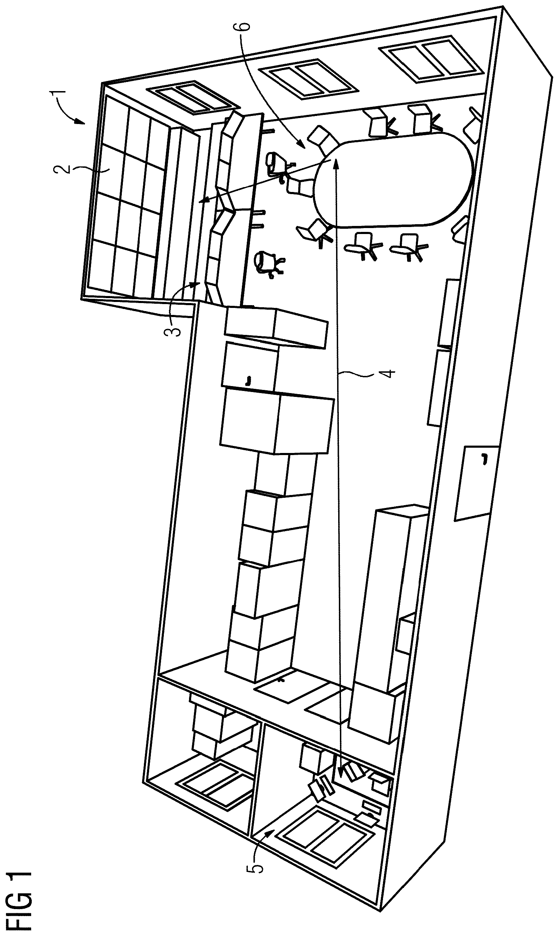

Figur 1 zeigt einen Trainingssimulator 1 mit einer großflächigen Monitorwand 2 zur Darstellung der graphischen Benutzeroberfläche der Netzleitstellensoftware und mit mehreren Computerarbeitsplätzen 3, an denen die Operatoren bzw. Benutzer die Netzleitstellensoftware bedienen können. Der Trainingssimulator 1 bildet eine Kontrollanordnung im Sinne der Erfindung. Die Netzleitstellensoftware ist dabei auf einem nicht dargestellten Server-Computer installiert.

Räumlich von den Computerarbeitsplätzen getrennt, so dass die Benutzer diese weder sehen noch hören können, ist eine Notfalleinrichtung 5 für ein Bereitstellen von Notfalldaten 4 an die Netzleitstellensoftware angeordnet. Die Notfalleinrichtung 5 ist kommunikativ z.B. per TCP/IP- Verbindung 4 angebunden. Die Notfalleinrichtung 5 weist z.B. einen Computer mit einer Datenbank für Notfalldaten bzw. Szenarien auf, so dass ein Bediener der Notfalleinrichtung solche Daten von Störungen auf die Netzleitstellensoftware einspielen kann. Darüber hinaus können in der Notfalleinrichtung 5 situativ Mediendaten (Video, Audio, Bilder, Fotos) abgespielt sowie PC-Anwendungen aktiviert oder deaktiviert werden, sodass eine realitätsnahe Beschreibung der Vor-Ort-Notfallsituation telefonisch ermöglicht wird.

Der Ablauf des Trainings wird durch einen Trainerarbeitsplatz 6 überwacht, an dem ein Trainer sowohl die Störung auswählen als auch die Benutzer beobachten kann, wie sie eine Lösung suchen.

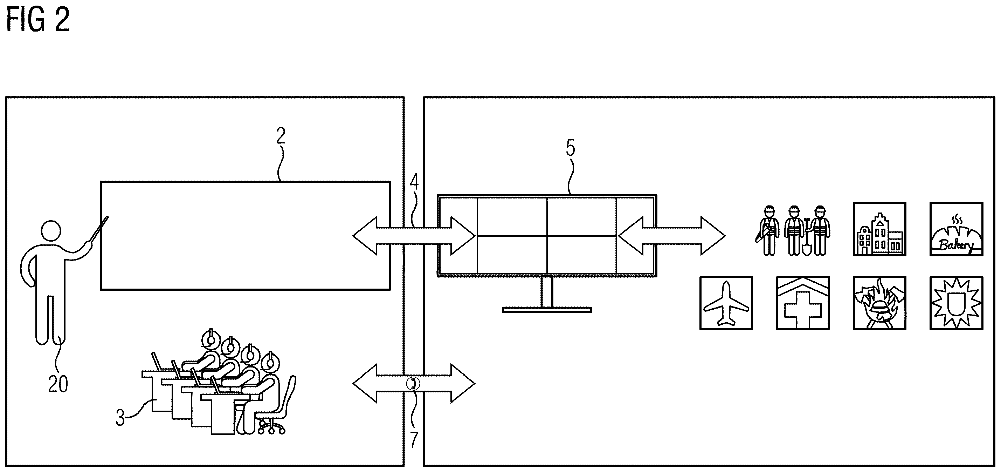

Ferner ist gemäß Figur 2 eine Telefonverbindung 7 zu den Computerarbeitsplätzen 3 vorgesehen, damit von der Notfalleinrichtung telefonisch eine Störung oder weitere Informationen an die Benutzer der Leitstellensoftware weitergegeben werden können. Weitere Informationen können z.B. beinhalten: Anrufe eines (sensiblen)Kunden, eines Passanten, eines Flughafen-Towers, einer Feuerwehrleitstelle, einer Polizeistation, einer Stadtverwaltung, einer Zeitung, einer Führungskraft, eines Technikers im Feld oder eines Wartungstechnikers an einer Anlage im Energieversorgungsnetz. Ferner können Wetterinformationen oder auch ein Feuerbericht übermittelt werden.

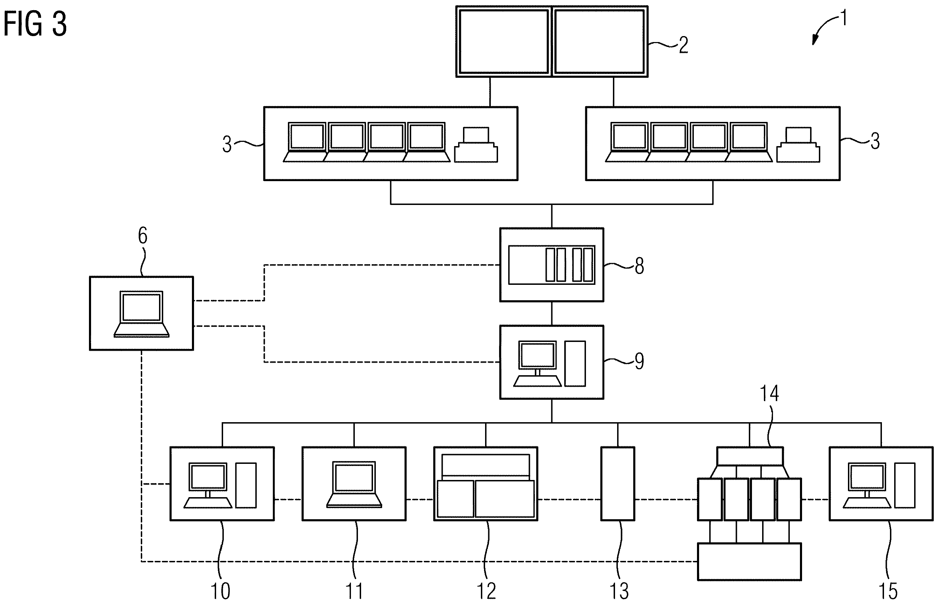

Figur 3 zeigt einen Übersichtsplan für den Trainingssimulator 1 gemäß Figur 1. An die Computerarbeitsplätze 3 ist die Monitorwand 2 angeschlossen. Die Computerarbeitsplätze 3 sind mit einem Netzwerkkontrollsystem 8 verbunden, das z.B. als ein Server-Computer mit der Netzleitstellensoftware ausgebildet ist.

Das Netzwerkkontrollsystem 8 wird von einer Bereitstellungseinrichtung 9 mit Messdaten versorgt, um einen Betrieb einer Netzleitstelle für ein Energieversorgungsetz zu simulieren. Die Bereitstellungseinrichtung 9 kann in einer Ausführungsform die Funktionalität der Notfalleinrichtung integriert aufweisen und entsprechend auch Notfalldaten bereitstellen.

Mit der Bereitstellungseinrichtung 9 sind eine dynamische Netzwerksimulation 10 für ein Netz mit 50 Hz Nennfrequenz, eine Substation bzw. Netzwerkskontrolle-Trainingsstation 11, eine Dispatch-Kontrolle-Trainingsstation 12, eine Mittelspannungs-Schalter- Trainingsstation 13, eine dynamische Hardware Simulation 14 und eine dynamische Netzwerksimulation 15 für ein Netz mit 16,7 Hz Nennfrequenz verbunden.

Der Trainerarbeitsplatz 6 ist mit allen Komponenten verbunden, die auch mit der Bereitstellungseinrichtung 9 verbunden sind sowie mit der Bereitstellungseinrichtung 9 selbst und dem Netzwerkkontrollsystem 8.

Die Datenkommunikation zwischen den in der Figur 3 dargestellten Komponenten erfolgt beispielsweise mittels der Standards IEC 61850, IEC 60870-5-104 oder IEC 60870-5-103.

Das Lösungskonzept hat dabei folgende Ziele:

1. Erzeugung realitätsnaher Simulationsbedingungen von Notfallsituationen

2. Konfrontieren der Trainees bzw. Benutzer an den Computerarbeitsplätzen 3 mit internen sowie externen entscheidungs- und stressbeeinflussenden Ereignissen zur zusätzlichen Stresserhöhung in einer simulierten Notfallsituation

3. Messung und Visualisierung von Körperfunktionsdaten (u.a. Körpertemperatur, Puls, Herzfrequenz) der Trainees während der Simulation von Notfallsituationen und ermitteln eines Stresswerts

4. Vermittlung von Stressbewältigungsstrategien und - methoden in Notfallsituationen zum Fördern, Trainieren und Entwickeln von Stressresistenz zur besseren Beherrschung von Notfallsituationen

5. Wissenschaftliche Nachweise über die Wirkung der vermittelten Stressbewältigungsmethoden

Während einer simulierten Notfallsimulation wird das zu trainierende Personal einer zusätzlichen Stresserhöhung ausgesetzt, um Stressresistenz zu fördern, zu trainieren und zu entwickeln. Dabei werden interne sowie externe entscheidungs- und stressbeeinflussende Ereignisse in Abhängigkeit vom aktuellen Stand des Simulationsablaufs gezielt eingeführt, gesteuert und manipuliert.

Das zu trainierende Personal wird während der gesamten Trainingsdauer ununterbrochen (24/7) an wissenschaftliche Messgeräte angeschlossen, um Körperwerte zu erfassen und zu visualisieren. Die so gemessenen und erfassten Körperwerte wie Temperatur, Herzfrequenz, Puls und das ermittelte Stressniveau zeigen das Ausmaß der Stressbeeinflussung während einer simulierten Notfallsituation. Im Rahmen des Trainingskonzeptes werden eigenentwickelte Stressbewältigungsstrategien und -methoden vermittelt, mit der Zielstellung, körperliche und mentale Ressourcen aufzubauen, um kritische Situationen zu bewältigen bzw. zu beherrschen. Um die Effektivität der vermittelten Stressbewältigungsstrategien und -methoden wissenschaftlich nachzuweisen, werden die gemessenen Körperwerte während der Erfassungszeit ausgewertet. Erst gegen Ende der Trainingsphase werden die simulierten Notfallsituationen souveräner und effektiver beherrscht, ohne dass die gemessenen Köperwerte, wie am Anfang des Trainings, hohe Beträge annehmen.

Der Trainer aktiviert in Abhängigkeit von der aktuellen Situation und Ablauf in der Leitwarte stressbeeinflussende Ereignisse, indem er mittels technischer Einrichtungen manipulierend Informationen und Anweisungen an weiteres Personal, das die Außenwelt spielt, übermittelt. Die Rollen, die von diesem Personal (Außenwelt) gespielt werden, hängen vom zu trainierenden Szenario ab. Diese so genannte Außenwelt nimmt z.B. telefonisch oder persönlich Kontakt mit den Operatoren in der Leitwarte auf. Die zu spielenden Rollen können der Chef, Service Team, Kunden, Sondervertragskunden, Polizei, Feuerwehr, Krankenhaus, Techniker, Reinigungskraft, Bürger, Passant, Delegation usw. sein.

Auf dem Server am Trainerarbeitsplatz 6 wird eine Software "Anti-Disaster-Training" (ADT) installiert und vom Trainer bedient. Diese kommuniziert auf dem Host-PC (Trainer-PC) über TCP/IP 4 mit mehreren Client-PCs (für die "Rollenspiele"), um die erforderlichen Informationen an das Personal, das verschiedene Rollen spielt und als Außenwelt wirkt zu senden.

Auf den Client-PCs wird jeweils eine Client-Software namens "ADTreceiver" installiert, um die entsprechenden Anweisungen und Informationen vom ADT empfangen zu können. Passend zum aktuellen Stand im Simulationsablauf werden die genannten Informationen live übertragen.

ADT ist so aufgebaut, dass ein Adaptieren an verschiedene Simulationen/Notfallübungen anderer kritischen Infrastrukturen und Aufgaben möglich ist. Rollen, die gespielt werden, schriftliche Anweisungen und Mediadateien, die gesendet werden, sowie Applikationssteuerungen können jederzeit angepasst bzw. ergänzt werden.

Die zu übertragenen Rollen, Szenen sowie schriftliche Anweisungen sind in einer Datenbank abgelegt. Die zu übertragenen Mediadateien (Audio-, Bilder-, Video-Files) sind in Ordnerstrukturen abgelegt. Ein Starten und Beenden beliebiger Applikationen auf den Client-PCs ist jederzeit möglich. Eine Simulation von Hacker-Angriffen auf das Netzleitsystem der Operatoren sowie Client-PCs ist ebenso möglich. Im ADT ist außerdem eine Chat-Server-Client-Funktionalität implementiert, um den Live-Infoaustausch zwischen Trainer und Trainingsteilnehmer zu ermöglichen.

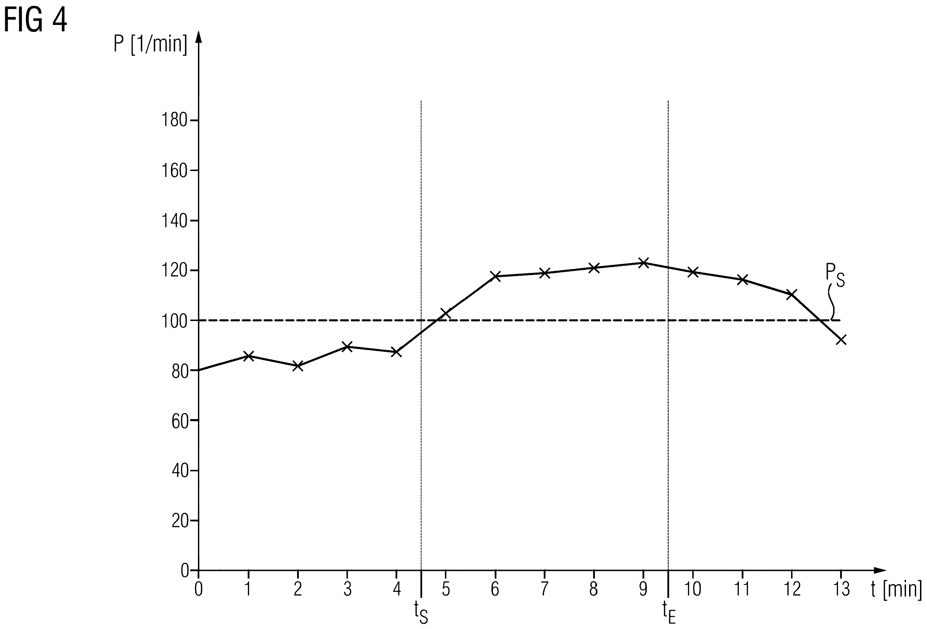

Figur 4 zeigt ein Beispiel für erfasste Körperfunktionsdaten anhand einer gemessenen Pulsfrequenz P im zeitlichen Verlauf. Der Puls wird jede Minute gemessen. Im Zeitraum $t_S$= 4,5 min bis $t_E$ = 9,5 min liegt eine Störung vor. Es ist erkennbar, wie die Pulsfrequenz des Benutzers vor der Störung bei ca. 80/min liegt und dann durch Stress beim Bewältigen der Störung auf ca. 120/min ansteigt. Nach Ende der Störung nähert sich die Pulsfrequenz wieder 80/min an.

Beispielsweise kann ein Schwellenwert für die Pulsfrequenz auf 100/min festgelegt werden. Der Stresswert beträgt in diesem Fall

$$120/min \; / \; 80 \; /min \; * \; 100 \; \% \; - \; 100 \; \% \; = \; 50 \; \%.$$

Entsprechend liegt ein erfolgreiches Training vor, wenn der Benutzer bei der nächsten Störung in einer Folgesitzung keine Pulsfrequenz über 100/min aufweist, d.h. einen negativen Stresswert zeigt.

**Patentansprüche**

1. Verfahren zum Steuern einer Kontrollanordnung (1) für eine Trainingssimulation, aufweisend die Schritte:

   Bereitstellen von Messdaten für einen Betrieb einer Netzleitstelleneinrichtung (8) mittels einer Bereitstellungseinrichtung (9), und
   Einspeisen von Notfalldaten, die auf eine Störung des Betriebs der Kontrollanordnung (1) hinweisen, mittels einer Notfalleinrichtung (5) in die Netzleitstelleneinrichtung (8), Erstellen von Kontrollsignalen mittels der Netzleitstelleneinrichtung (8), um die Störung zu beseitigen,
   und Messen von Körperfunktionsdaten (P) eines Benutzers der Kontrollanordnung mittels einer Körperfunktionsmesseinrichtung, und Auswerten eines zeitlichen Verlaufs der Körperfunktionsdaten (P) unter Berücksichtigung des Zeitraums ($t_S..t_E$) der Störung mittels einer Auswertungseinrichtung (6), um einen Stresswert zu ermitteln, **dadurch gekennzeichnet, dass**
   das Einspeisen von Notfalldaten und das Erstellen von Kontrollsignalen wiederholt werden, bis der Stresswert während einer Störung unterhalb eines vorher festgelegten Schwellenwertes liegt.

2. Verfahren nach Anspruch 1, **dadurch gekennzeichnet, dass** für die Messdaten und/oder die Notfalldaten simulierte Daten verwendet werden.

3. Verfahren nach Anspruch 1 oder 2, **dadurch gekennzeichnet, dass** für die Körperfunktionsdaten (P) mindestens eine der folgenden Körperfunktionsdaten (P) verwendet werden: Hauttemperatur, Elektrischer Leitwert der Haut, Pulsfrequenz, Blutdruck, Muskeltonus, Elektroenzephalogramm, Speichel-Cortisol-Wert, Blutzucker.

4. Verfahren nach einem der vorgenannten Ansprüche, **dadurch gekennzeichnet, dass** das Messen von Körperfunktionsdaten (P) kontinuierlich durchgeführt wird.

5. Verfahren nach einem der vorgenannten Ansprüche, **dadurch gekennzeichnet, dass**
   für die Messdaten mindestens einer der folgenden Messwerte eingesetzt wird: Spannung, Stromstärke, Phasor-Messwerte, Schaltstellungen von Stufenschaltern von Transformatoren, Leistung, Blindleistung, Power Quality, Betriebszustände von Betriebsmitteln, Status von Schutzgeräten.

6. Verfahren nach einem der vorgenannten Ansprüche, **dadurch gekennzeichnet, dass** für die Notfalldaten mindestens eine der folgenden Notfalldaten eingesetzt wird: Strommessdaten, die auf eine Störung des Netzes hindeuten; Spannungsmessdaten, die auf eine Störung des Netzes hindeuten; Blackout-Signale von Smart Metern und/oder IEDs und/oder Schutzgeräten; Telefonanruf über eine Störung.

7. Kontrollanordnung (1) für eine Trainingssimulation, aufweisend:

   eine Bereitstellungseinrichtung (9) zum Bereitstellen von Messdaten für einen Betrieb einer Netzleitstelleneinrichtung (8),
   eine Notfalleinrichtung (5) zum Einspeisen von Notfalldaten, die auf eine Störung des Betriebs der Kontrollanordnung (1) hinweisen, in die Netzleitstelleneinrichtung (8), wobei die Netzleitstelleneinrichtung (8) ausgebildet ist, Kontrollsignale zu erstellen, um die Störung zu beseitigen, und
   eine Körperfunktionsmesseinrichtung, die zum Messen von Körperfunktionsdaten (P) eines Benutzers der Kontrollanordnung ausgebildet ist,
   und eine Auswertungseinrichtung zum Auswerten eines zeitlichen Verlaufs der Körperfunktionsdaten (P) unter Berücksichtigung des Zeitraums ($t_S..t_E$) der Störung ausgebildet ist, um einen Stresswert zu ermitteln, **dadurch gekennzeichnet, dass**
   die Kontrollanordnung ausgebildet ist, das Einspeisen von Notfalldaten und Erstellen von Kontrollsignalen zu wiederholen, bis der Stresswert während einer Störung unterhalb eines vorher festgelegten Schwellenwertes liegt.

8. Kontrollanordnung (1) nach Anspruch 7, **dadurch gekennzeichnet, dass** die Messdaten und/oder die Notfalldaten simulierte Daten aufweisen.

9. Kontrollanordnung (1) nach Anspruch 7 oder 8, **dadurch gekennzeichnet, dass** die Körperfunktionsdaten (P) mindestens eine der folgenden Körperfunktionsdaten (P) aufweisen: Hauttemperatur, Elektrischer Leitwert der Haut, Pulsfrequenz, Blutdruck, Muskeltonus, Elektroenzephalogramm, Speichel-Cortisol-Wert, Blutzucker.

10. Kontrollanordnung (1) nach einem der Ansprüche 7 bis 9, **dadurch gekennzeichnet, dass** die Körperfunktionsmesseinrichtung ausgebildet ist, das Messen von Körperfunktionsdaten (P) kontinuierlich durchzuführen.

11. Kontrollanordnung (1) nach einem der Ansprüche 7 bis 10, **dadurch gekennzeichnet, dass** die Messdaten mindestens einen der folgenden Messwerte aufweisen: Spannung, Stromstärke, Phasor-Messwerte, Schaltstellungen von Stufenschaltern von Transformatoren, Leistung, Blindleistung, Power Quality, Betriebszustände von Betriebsmitteln, Status von Schutzgeräten.

12. Kontrollanordnung (1) nach einem der Ansprüche 7 bis 11, **dadurch gekennzeichnet, dass** die Notfalleinrichtung (5) ausgebildet ist, für die Notfalldaten mindestens eine der folgenden Notfalldaten einzusetzen: Strommessdaten, die auf eine Störung des Netzes hindeuten; Spannungsmessdaten, die auf eine Störung des Netzes hindeuten; Blackout-Signale von Smart Metern und/oder IEDs und/oder Schutzgeräten; Telefonanruf über eine Störung.

**Claims**

1. Method for controlling a control arrangement (1) for a training simulation, comprising the following steps:

   providing measurement data for operation of a network control centre device (8) by way of a provisioning device (9), and
   feeding in emergency data indicating a malfunction of the operation of the control arrangement (1) into the network control centre device (8) by way of an emergency device (5), generating control signals by way of the network control centre device (8) to rectify the malfunction,
   and measuring body function data (P) of a user of the control arrangement by way of a body function measuring device, and
   evaluating a temporal profile of the body function data (P) taking into account the time period ($t_S..t_E$) of the malfunction by way of an evaluation device (6) in order to determine a stress value, **characterized in that**
   emergency data are fed in and control signals are generated repeatedly until the stress value during a malfunction is below a previously defined threshold value.

2. Method according to Claim 1, **characterized in that** simulated data are used for the measurement data and/or the emergency data.

3. Method according to Claim 1 or 2, **characterized in that** at least one of the following body function data (P) are used for the body function data (P): skin temperature, electrical conductivity of the skin, pulse rate, blood pressure, muscle tone, electroencephalogram, saliva cortisol value, blood sugar.

4. Method according to one of the preceding claims, **characterized in that** body function data (P) are measured continuously.

5. Method according to one of the preceding claims, **characterized in that**
at least one of the following measured values is used for the measurement data: voltage, current, phasor measured values, switching positions of step switches of transformers, power, reactive power, power quality, operating states of resources, status of protective equipment.

6. Method according to one of the preceding claims, **characterized in that** at least one of the following emergency data is used for the emergency data: current measurement data indicating a malfunction in the network; voltage measurement data indicating a malfunction in the network; blackout signals from smart meters and/or IEDs and/or protective equipment; telephone call about a malfunction.

7. Control arrangement (1) for a training simulation, comprising:

a provisioning device (9) for providing measurement data for operation of a network control centre device (8), an emergency device (5) for feeding in emergency data indicating a malfunction of the operation of the control arrangement (1) into the network control centre device (8), wherein the network control centre device (8) is designed to generate control signals to rectify the malfunction, and a body function measuring device designed to measure body function data (P) of a user of the control arrangement,
and an evaluation device for evaluating a temporal profile of the body function data (P) taking into account the time period ($t_s..t_E$) of the malfunction in order to determine a stress value, **characterized in that** the control arrangement is designed to repeatedly feed in emergency data and generate control signals until the stress value during a malfunction is below a previously defined threshold value.

8. Control arrangement (1) according to Claim 7, **characterized in that** the measurement data and/or the emergency data include simulated data.

9. Control arrangement (1) according to Claim 7 or 8, **characterized in that** the body function data (P) include at least one of the following body function data (P): skin temperature, electrical conductivity of the skin, pulse rate, blood pressure, muscle tone, electroencephalogram, saliva cortisol value, blood sugar.

10. Control arrangement (1) according to one of Claims 7 to 9, **characterized in that** the body function measuring device is designed to measure body function data (P) continuously.

11. Control arrangement (1) according to one of Claims 7 to 10, **characterized in that** the measurement data include at least one of the following measured values: voltage, current, phasor measured values, switching positions of step switches of transformers, power, reactive power, power quality, operating states of resources, status of protective equipment.

12. Control arrangement (1) according to one of Claims 7 to 11, **characterized in that** the emergency device (5) is designed to use at least one of the following emergency data for the emergency data: current measurement data indicating a malfunction in the network; voltage measurement data indicating a malfunction in the network; blackout signals from smart meters and/or IEDs and/or protective equipment; telephone call about a malfunction.

**Revendications**

1. Procédé de commande d'un agencement (1) de contrôle d'une simulation d'apprentissage, comportant les stades :

on se procure des données de mesure d'un fonctionnement d'un dispositif (8) de poste de conduite de réseau au moyen d'un dispositif (9) de mise à disposition, et

on injecte des données de cas d'urgence, qui se rapportent à une perturbation du fonctionnement de l'agencement (1) de contrôle, dans le dispositif (8) de poste de conduite de réseau au moyen d'un dispositif (5) de cas d'urgence,

on établit des signaux de contrôle au moyen du dispositif (8) de poste de conduite de réseau, afin d'éliminer la perturbation,

et on mesure des données (P) de fonction corporelle d'un utilisateur de l'agencement de contrôle au moyen d'un dispositif de mesure de fonction corporelle, et

on analyse une courbe en fonction du temps des données (P) de fonction corporelle en tenant compte de l'espace ($t_S..t_E$) de temps de la perturbation au moyen d'un dispositif (6) d'analyse, afin de déterminer une valeur de stress, **caractérisé en ce que**

l'on répète l'injection de données de cas d'urgence et l'établissement de signaux de contrôle, jusqu'à ce que la valeur de stress pendant une perturbation soit en-dessous d'une valeur de seuil fixée à l'avance.

2. Procédé suivant la revendication 1, **caractérisé en ce que** l'on utilise des données simulées pour les données de mesure et/ou les données de cas d'urgence.

3. Procédé suivant la revendication 1 ou 2, **caractérisé en ce que** l'on utilise, pour les données (P) de fonction corporelle, au moins l'une des données (P) de fonction corporelle suivantes : température de la peau, conductance électrique de la peau, fréquence du pouls, tension artérielle, tonus musculaire, électroencéphalogramme, valeur de cortisol salivaire, sucre dans le sang.

4. Procédé suivant l'une des revendications précédentes, **caractérisé en ce que** l'on effectue la mesure de données (P) de fonction corporelle en continu.

5. Procédé suivant l'une des revendications précédentes, **caractérisé en ce que** l'on utilise, pour les données de mesure, au moins l'une des valeurs de mesure suivantes : tension, intensité du courant, valeur de mesure de phase, position de commutation de commutateur de prise de transformateur, puissance, puissance réactive, power quality, état de fonctionnement de moyens de fonctionnement, état d'appareils de protection.

6. Procédé suivant l'une des revendications précédentes, **caractérisé en ce que** l'on utilise, pour les données de cas d'urgence, au moins l'une des données de cas d'urgence suivantes : données de mesure de courant, qui renvoient à une perturbation du réseau ; données de mesure de tension, qui renvoient à une perturbation du réseau ; signaux de blackout de dispositifs de mesure intelligents et/ou d'IEDs et/ou d'appareils de protection ; appel téléphonique au sujet d'une perturbation.

7. Agencement (1) de contrôle d'une simulation d'apprentissage comportant :

un dispositif (9) de mise à disposition pour disposer de données de mesure d'un fonctionnement d'un dispositif (8) de poste de conduite de réseau,
un dispositif (5) de cas d'urgence pour injecter dans le dispositif (8) de poste de conduite de réseau des données de cas d'urgence, qui renvoient à une perturbation du fonctionnement de l'agencement (1) de contrôle, dans lequel le dispositif (8) de poste de conduite de réseau est constitué pour établir des signaux de contrôle, afin d'éliminer la perturbation et un dispositif de mesure de fonction corporelle, qui est constitué pour la mesure de données (P) de fonction corporelle d'un utilisateur de l'agencement de contrôle, et
un dispositif d'analyse est constitué pour l'analyse d'une courbe en fonction du temps des données (P) de fonction corporelle en tenant compte de l'espace ($t_S..t_E$) de temps de la perturbation, afin de déterminer une valeur de stress, **caractérisé en ce que** l'agencement de contrôle est constitué pour répéter l'injection de données de cas d'urgence et l'établissement de signaux de contrôle, jusqu'à ce que la valeur de stress pendant une perturbation soit en-dessous d'une valeur de seuil fixée à l'avance.

8. Agencement (1) de contrôle suivant la revendication 7, **caractérisé en ce que** les données de mesure et/ou les données de cas d'urgence comportent des données simulées.

9. Agencement (1) de contrôle suivant la revendication 7 ou 8, **caractérisé en ce que** les données (P) de fonction corporelle comportent au moins l'une des données (P) de fonction corporelle suivantes : température de la peau, conductance électrique de la peau, fréquence du pouls, tension artérielle, tonus musculaire, électroencéphalogramme, valeur de cortisol salivaire, sucre dans le sang.

10. Agencement (1) de contrôle suivant l'une des revendications 7 à 9, **caractérisé en ce que** le dispositif de mesure de fonction corporelle est constitué pour effectuer la mesure de données (P) de fonction corporelle en continu.

11. Agencement (1) de contrôle suivant l'une des revendications 7 à 10, **caractérisé en ce que** les données de mesure comportent au moins l'une des valeurs suivantes : tension, intensité du courant, valeur de mesure de phase, position de commutation de commutateur de prise de transformateur, puissance, puissance réactive, power quality, état de fonctionnement de moyens de fonctionnement, état d'appareils de protection.

12. Agencement (1) de contrôle suivant l'une des revendications 7 à 11, **caractérisé en ce que** le dispositif (5) de cas d'urgence est constitué pour utiliser, pour les données de cas d'urgence, au moins l'une des données de cas d'urgence suivantes : données de mesure de courant, qui renvoient à une perturbation du réseau ; données de mesure de tension, qui renvoient à une perturbation du réseau ; signaux de blackout de dispositifs de mesure intelligents et/ou d'IEDs et/ou d'appareils de protection ; appel téléphonique au sujet d'une perturbation.

FIG 1

FIG 2

EP 4 113 482 B1

FIG 3

FIG 4

**EP 4 113 482 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 110162169 A
- US 2018232132 A1
- CN 110349058 A

**In der Beschreibung aufgeführte Nicht-Patentliteratur**

- *Intelligent control center technology - Spectrum Power™ - The Smart Grid - Constant Energy in a World of Constant Change,* 2021
- *Simulierte Realität - Ein neuer Simulator für die Dispatcher-Schulung,* 2005